# EUROPEAN PATENT APPLICATION

(11) **EP 1 457 928 A1**
(43) Date of publication of application: **15.09.2004**
(21) Application number: 04101005.9
(22) Date of filing: 11.03.2004
(51) Int. Cl.: G07B 15/00, H04L 12/00, H04L 29/00

(54) **Road Charging System**

(30) Priority: 11.03.2003 GB 0305497
(71) Applicant: Atos Origin IT Services UK Ltd., London NW1 3HG (GB)
(72) Inventor: Cook, Melanie, DH7 8LW, Durham (GB); Etherington-Smith, Simon, GU52 6QZ, Church Crookham (GB)
(74) Representative: Weihs, Bruno

(57) **Abstract**

A road charging system comprises a Location Based Services (LBS) device (101) cooperating with a first network (102) to determine geographical localization data of the LBS device (101), a Mobile Operator Emitter (MOE) device (103) cooperating with a second network (104) to transmit at least the geographical localization data of the LBS device (101), and data capturing means (105) to capture from the second network (104) the geographical localization data. The system further comprises locating means (105, 106) to establish a geographical locating of the LBS device (101) from at least the geographical localization data, and charging means (107) to charge depending on the locating of the LBS device (101).

## Description

### Technical Field

The invention relates generally to a traffic management system.

### Background Art

Traffic congestion is becoming a serious problem in towns and cities. It imposes considerable direct costs on road users through longer journey times, journey time unreliability, increased fuel consumption, and frustration and discomfort for vehicle drivers and passengers. It also makes it more difficult for public transport operators to provide an efficient and reliable service. At the same time congestion is a major contributor to air pollution, which affects health, generates noise, and causes a nuisance, all of which have a detrimental impact on the quality of life.

Existing traffic management measures available to local authorities involve the restriction of traffic from specified roads and/or areas, re-allocation of road space to give priority to modes of transport other than private road vehicles, and control of price and availability of public on-street and off-street parking. These measures are not sufficient to tackle the problems of traffic congestion and it is inevitable that increased urbanisation will yield greater traffic congestion as a by-product, making some form of regulatory restraint necessary. Currently, a standard method employed by local traffic authorities is to increase the road capacity via investment in the road infrastructure. Consequently this seems only to induce ever-increasing demand for travel and appears to be about 15 times more expensive than managing the use of existing transport infrastructures. It is also unlikely that the road capacity will be able to keep pace with the rapid growth in travel demand resulting from increases in population and vehicle ownership.

An economically efficient solution to reduce congestion of traffic is to price the use of roads, which is not as radical as it may seem. However, over the years the vast majority of us, as motorists, have become accustomed to un-priced roads. A public that is used to getting its roads for 'free' naturally resists the notion that it should be paying for their use.

But the fact is that roads are not free. Their costs are paid for indirectly through higher taxes (for public roads and parking), and higher prices on retail goods (for parking provided by businesses) and lower wages (for parking provided by employers). Moreover, paying indirectly for roads is inefficient and unfair because, inevitably, some will pay too much compared with their road usage whilst others will pay too little. Furthermore, when roads are un-priced users have little incentive to ration their use. Congestion of roads is unavoidable.

In order to succeed, road user charging must be seen to be financially neutral and be demonstrably fair and equitable.

Traffic management in urban areas can be achieved either by the regulatory approach, through 'command and control' measures, or by the market based approach, through road user charging, which is rapidly becoming the preferred method due to its flexibility.

### Disclosure of Invention"

In a first aspect the invention provides a road charging system comprising a Location Based Services (LBS) device and a Mobile Operator Emitter (MOE) device. The LBS device cooperates with a first network to determine geographical localization data of the LBS device. The MOE device cooperates with a second network to transmit at least the geographical localization data of the LBS device. The road charging system further comprises data capturing means to capture from the second network the geographical localization data, locating means to establish a geographical locating of the LBS device from at least the geographical localization data, and charging means to charge depending on the locating of the LBS device.

In a first preferred embodiment the road charging system further comprises identification data identifying a user of the road charging system, and registering means to receive identification data over the second network, and to identify geographical localization data using the received identification data.

In a second preferred embodiment the road charging system further comprises a second LBS device cooperating with the second network to determine geographical localisation data of the second LBS device, the geographical localisation data of the second LBS device being transmitted on the second network using the MOE device.

In third preferred embodiment the road charging system further comprises a map engine providing geographical data to the locating means, the locating means using the geographical data and the geographical localization data to locate the LBS device on a map.

In a fourth preferred embodiment the LBS device is a Global Positioning System (GPS) positioning device operating in a satellite network, and the MOE device is a Global System of Mobiles terminal operating in a GSM network, the MOE device being operatively connected to the LBS device to obtain the geographical localization data.

In a fifth preferred embodiment the LBS device and the MOE device are mounted in a vehicle.

In a sixth preferred embodiment the geographical localization data is transmitted continuously over the second network.

In a seventh preferred embodiment the road charging system further comprises encrypting means to encrypt data transmitted over the second network.

In an eight preferred embodiment the road charging system further comprises traffic monitoring means using the geographical locating from the locating means to display a locating of the LBS device (101) on a map.

In a ninth preferred embodiment the road charging system further comprises a payment system operatively connected to the MOE device and receiving charging data from the charging means over the second network.

In a second aspect the invention provides a method for charging a road user. The method comprises determining geographical localization data for the road user in a Location Based System network, transmitting the geographical localization data of the road user over a Mobile Operator Emitter network distinct from the LBS network to a central server, and locating the road user by processing the transmitted geographical localization data. The method further comprises charging the road user based on the locating.

In a tenth preferred embodiment the method for charging a road user comprises transmitting identification data for the road user over the MOE network to the central server, registering the road user based on the transmitted identification data, and charging the road user based on the registration of the road user.

In an eleventh preferred embodiment the determining of geographical localization data is operated using a Global Positioning System, and the transmitting of the geographical localization data is operated over a Global System of Mobiles network.

In a twelfth preferred embodiment the method for charging a road user further comprises determining geographical localization data of the road user using the GSM network.

In a thirteenth preferred embodiment the charging is operated according to a charging scheme qualified by one or many of terms in the list : point based, area based, national based, local based, continuous based.

In a fourteenth preferred embodiment the method for charging a road user, further comprises encrypting transmissions over the MOE network.

In a fifteenth preferred embodiment the charging comprises transmitting charging information to the road user over the MOE network, and executing a payment operation at the road user based on charging information received over the MEO network.

Other aspects and advantages of the invention will be apparent from the following description and the appended claims.

### Brief Description of Drawings

Fig. 1 schematically illustrates a road charging system according to the invention;

Fig. 2 contains a block diagram illustrating components of a road charging system according to the invention.

### Mode(s) for Carrying Out the Invention

### Prior art traffic management

One of the most prevalent ways of charging for road usage is through direct methods - of which manual tolling is still the most administratively straightforward and publicly accepted technology. However, in recent years the focus has shifted towards electronic charging. A further complication with direct charging is that it can be either *Off-Vehicle* or On-Vehicle charging. 'Off Vehicle' charging is analogous with telephone, gas or electricity charges.

The actual charging is monitored off the vehicle. All *Off Vehicle* charging is based on point pricing, which refers to the pricing of a vehicle when it passes a charging point such as a toll site. Alternatively, On Vehicle charging registers the actual charges on the vehicle using automatic meters analogous with stored value phone cards. On-Vehicle charging is based on either point-pricing or continuous pricing, where continuous pricing involves clocking a vehicle for the time spent or distance covered between two charging points.

*Off-Vehicle* charges can be imposed directly, using manual charging. This method, however, results in stop-start traffic, which increases travel times and operating costs in the form of fuel and vehicle wear and tear. Setting up tollbooths also requires considerable capital investment, and the operating costs are non-trivial as toll operator salaries drive them. Other problems arise due to the lack of financial control of toll box revenues. Besides the manual operation of tollbooths, automatic coin machines for exact change are used. These save on personnel costs and marginally improve the throughput, although they only allow charging for one type of vehicle per lane. Another form of charging is with coupon books. They have similar advantages to automatic coin machines, but the printing cost is not insignificant.

*Off-Vehicle* charges can alternatively be imposed directly using electronic charging via AVI technologies:

### • Optical & Infra-red systems

With optical systems coded labels are placed outside the vehicle. A laser beam from an optical scanner tracks the bar code sticker and analyses the reflected light. This technology is not very reliable under conditions of poor visibility, and counterfeiting of bar codes is easily carried out. Also, a vehicle's speed is lowered when attempting to meet the exacting requirements imposed by optical systems. Infra-red technology is based on similar principles of operation to the optical-based technology, but also fails when subjected to poor environmental conditions.

### • Inductive loop systems

Inductive loop systems operate like conventional traffic detection and counting loop mechanisms embedded in the road pavement. An inductive loop system operates at frequencies between 50 and 500 kHz, so it can also be regarded as a low radio frequency system.
Operationally, an antenna loop situated in the pavement communicates with a transponder mounted underneath a moving vehicle. There are three types of systems: active, semi-active, and passive. The active system derives its power from the motor vehicle's power supply itself. Since the electronic transponders are powered externally in an active system the security of the system may, inadvertently, be vulnerable to external interference. A passive transponder is one that is energised when the vehicle passes a power loop buried beneath the road surface. In response to being activated the transponder's identification code is decoded and returned to receiver loops embedded in the road, which in turn transmits the information to a computer for data processing. A passive transponder's principal disadvantage is the limited field length within which it could be triggered and operated. A more recent technological development, aimed at overcoming the shortcomings of both systems, involves the production of a semi-active transponder with an internal lithium battery. This yields greater operating distance as well as relatively long life.

### • Radio Frequency (RF) & Microwave systems

The radio frequency transmissions span the officially approved kHz, MHz and GHz ranges. Because of the higher frequency more data can be packed and transmitted back and forth, which is vital to enhancing system security. At the same time, lower operating wavelengths of microwave systems result in the manufacturing of a smaller and lightweight transponder.
Just as with inductive loop systems, there are three types of transponders with microwave systems. A semi-active tag appears to possess the advantages of being able to transmit large amounts of information in a very short time, over a relatively longer operating distance, while it can keep the power transmission level of microwave antenna-readers at tolerably low levels.
Since many of the transponders operational on toll roads are of the passive and read-only type, such a transponder electronically communicates its encrypted identification code with roadside readers via high frequency radio waves.

*On-Vehicle* charges are imposed directly using electronic charging via AVI smart card systems.

Smart card technology is based on a two-way communication link between a 'smart' on-board unit and a roadside antenna. An on-board unit is composed of a smart card, a smart card reader, and a transponder. In addition to the standard integrated circuits found in radio-frequency tags, the smart transponder possesses a microprocessor that has both read and write capability. The smart transponder is able to maintain a transactions balance independent of a central computer and can perform simple arithmetic operations when activated, acquiring the function of an electronic purse. Whenever a vehicle passes a charging point, the on-board unit can be programmed to emit a tone to signal the completion of a valid transaction.

The smart card can be re-valued at designated machines after the decrements reach a threshold level, whereupon a warning on the in-vehicle unit to which the card is attached is automatically turned on. Re-value may for example be set by direct debit or through an internet transaction. For example, an agreement may be set up between the holder of the smart card and a bank to automatically top up the monetary value of the smart card if the monetary value drops below the threshold level. Other functions include the capability to record a history of the transactions made, possibly for the purpose of contesting any alleged discrepancies.

A prime advantage of smart card-type AVI technology, relative to microwave AVI technology alone, is that there need be no paper trail and anonymity/privacy may be assured.

A second advantage of a smart card system is that it obviates the need to maintain a costly central charging system capable of handling all the separate user accounts.

A third advantage is that an instantly deducted charge could have a greater impact than a billing arrangement settled by credit card at the end of the month, as it would make a driver more acutely aware of a trip's cost.

The chief disadvantages of smart cards, as opposed to the less vulnerable microwave AVI systems, are that they require complex vehicle to roadside communications and that multi-lane problems still need to be overcome entirely. Sophisticated vehicle to roadside communications could be used as an opportunity to integrate electronic route guidance and information systems with the smart card automatic debiting system. The use of smart cards for AVI, despite their high cost compared with microwave AVI, may be integrated with the growing use of smart cards in several banking systems, making them more appealing in the future.

### Mobile Operator Emitters (MOE)

One object of the present invention may be to provide a solution to a road user charging scheme that uses an established and proven infrastructure and reduces running cost incurred. Such a road user charging scheme may easily be afforded by towns and cities of all sizes.

Vehicles may be equipped with in vehicle MOE, which interoperate with a Mobile Telecommunication Network. The Mobile Telecommunication Network may for example be a Global System of Mobiles (GSM) telecommunication network, as is well known from prior art.

The MOE is preferably permanently installed in the vehicle and provides notification details. A notification detail may for example be provided when the vehicle enters or exits a specified congestion zone.

The MOE may be either battery powered or hard wired. The MOE may for example be removably connected to a vehicle's electrical system for charging through a cordon, permanently connected for continuous charging, or use a combination of both ways of connecting.

The MOE may comprises encrypting means to encrypt data transmitted over the Mobile Telecommunication network.

### Location Based Services (LBS)

LBS are applications based on the fact that we are able to determine geographical coordinates for a device in a network. LBS are currently supported by a multitude of technologies in various networks, e.g. they may be supported by "Cell ID" or "Triangulation" in a network.

Mobile network operators technology currently supports the concept of LBS. The mobile network operator has the ability to generate x,y coordinates for each device on the network via one or a plurality of Locations Exchange Servers (LES).

One example of LBS in a mobile network is known from GSM networks. Methods of localisation of GSM emitter within a GSM cellular network having a plurality of base stations is for example described in the international application **WO 0197547 A.**

A further example of LBS may be based on the well known Geostationary Positioning System (GPS).

Combining MOE and LBS may allow establishment of a vehicle's position via a network and the generation of a notification depending on the vehicle's position in the network. The notification may be related to a road charging scheme.

As an example, if a vehicle is driven into a pricing area, its position is identified as being in the pricing area and a corresponding notification is sent using the vehicle's MOE via the network. The corresponding notification may be used for billing purposes.

### Use of GPS and GSM

According to a preferred embodiment of the invention, a road charging system may be based on the combined use of GPS and GSM.

GPS and GSM are existing systems that are widely spread and accessible over local, regional and national geographical areas. The use of existing systems reduces infrastructure and running costs requirements when implementing the road charging system. In addition the use of existing systems makes the road charging system available in all geographical areas where GPS and GSM are accessible. As will become apparent from the following description, the road charging system may be applied across any vehicles type, and has the advantages of being flexible, efficient, accurate and quickly deliverable.

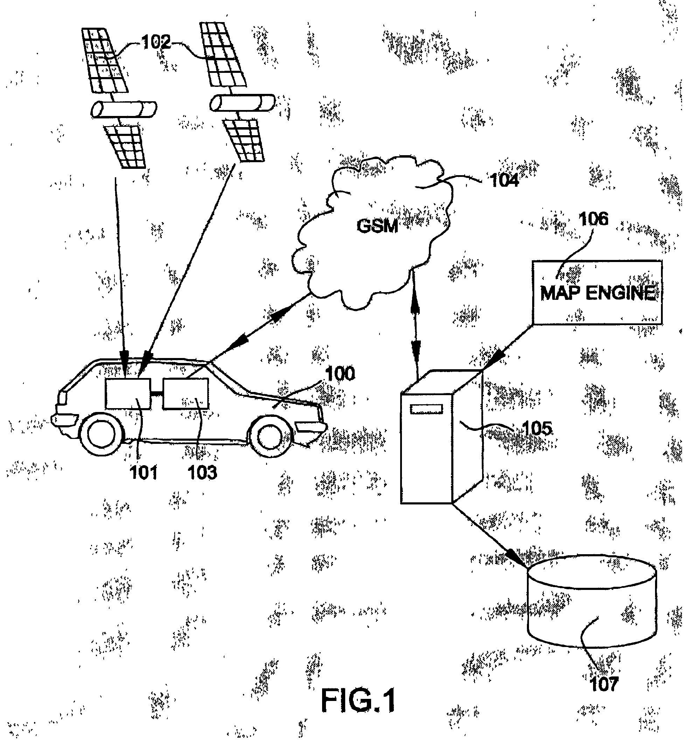

Fig. 1 schematically illustrates an example embodiment of a road charging system. A road user 100 comprises a GPS positioning device 101 that uses positioning signals providing from GPS satellites 102 to determine a geographical localization of the road user 100. The road user 100 further comprises a GSM terminal 103 that communicates in a GSM network 104. The GSM terminal 103 is able to receive data from the GSM network 104 and to transmit data through the GSM network. As is well known from GSM networks, the GSM terminal 103 may be used to determine a geographical localization of the road user 100 using signals from the GSM network 104. This property of the GSM network may be used as a backup in case the GPS positioning device 101 fails to provide geographical localization data.

Although the GPS positioning device 101 and the GSM terminal 103 have been illustrated in separate boxes, it is understood that the GPS positioning device 101 and the GSM terminal 103 may be either separate devices or integrates in a single combined device.

According to the invention, the GSM terminal 103 receives geographical localization data from the GPS positioning device 101 concerning road user 100 and transmits the geographical localization data to a server 105 for further processing. A map engine 106 typically provides geographical data to the server 105. The geographical data is processed and correlated to at least the geographical localization data received from the road user 100. A position of the road user 100 is eventually output from the server 105 to a road data processing centre 107. The position of the road user 100 may be used for a plurality of services, such as charging for road usage, as input for a web site or to generate messages for the attention of the road user 100. The latter messages may be transmitted to the road user 100 through the GSM network 104 and received with the GSM terminal 103.

Preferably the GSM terminal 103 may transmit identification data to identify the road user 100. The identification data may be processed together with the position of the road user 100 in the road data processing centre 107.

Preferably encrypting means are used to encrypt data transmitted over the GSM network.

This road charging system according to the invention combines GPS with GSM technology to produce a hybrid product that is both fast and accurate.

GPS typically suffers from slow start up due to the need to identify a Mobile Operator Emitter (MOE)'s position that could be anywhere on the face of the earth.

GSM using 'cell ID' or triangulation delivers less accurate positioning than GPS due to the underlying technology, but it is very quick.

If a GPS system is given a unit's approximate position from the GSM cell ID location then the start up from "cold" for GPS is considerably reduced. Also where the GPS signal fails due to high buildings or mountainous terrain it is possible to revert to the GSM network for a location fix by pinging the unit. In built up areas where GPS fallout may be high the GSM cell fix is at it's best due to cell mast density therefore these two technologies compliment each other.

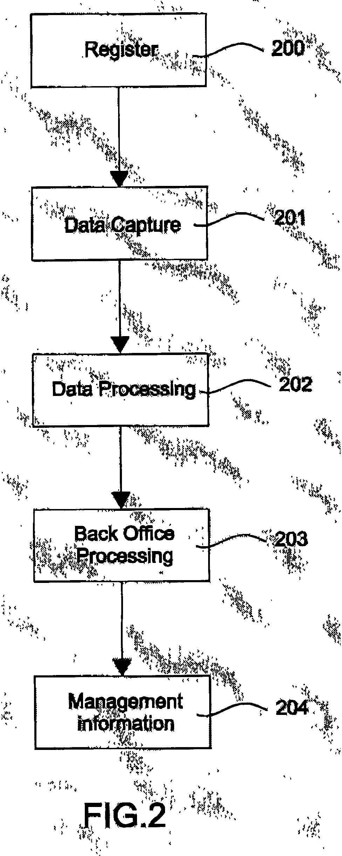

The road charging system according to the invention may comprises at least five components regardless of its scale or technology. Fig. 2 illustrates the five components in a generic manner, using boxes 200-204 that are connected in an order in which data may be handled in the road charging system.

In box 200 a user is registered in the road charging system. For example, the road user 100 of Fig. 1 is registered in the road charging system. The registration may for example involve the use of the identification data of the road user 100.

Next in box 201, data is captured. The data may comprise geographical localization data obtained using the GPS positioning device 101 and the GSM terminal 103 shown in Fig. 1. The data may further comprise the identification data that allows identification of the road user 100, and the geographical data provided by the map engine 106. The data is centralized in the server 105.

Captured data is processed as shown in box 202. The processing may involve identification data. The processing typically correlates the geographical localization data and the geographical data. At this point the processing may also involve charging information, such as for example the entering of a geographical area for which the road user 100 may be charged.

Processed data is forwarded to a back office processing component 203, where the processed data is stored, and further processed for the purposes of e.g. charging, settlement between parties, feeding a web site, generating a message to the road user or a road charging system operator.

In box 204, the information generated by the back office processing 203 is eventually made available as management information.

An advantage of the road charging system according to the invention is that it can be used for point or area-based charging schemes, as well as continuous based charging. Crucially, it will seamlessly integrate with current schemes.

Preferably, the road charging system according to the invention uses a semi (battery powered) or a permanently (hard wired) installed in-vehicle combined LBS and MOE equipment. As previously described the combined LBS and MOE equipment allows identification of the vehicle and, potentially, the driver. The identification of the driver may require appropriate specification and include the use of a smart card or similar device.

Preferably the combined LBS and MOE equipment provides geographical localization data of the road user's location via a GPS data feed. The geographical localization data may provided from the combined LBS and MOE equipment to the server using a high speed General Packet Radio System (GPRS) communication platform. The GPRS uploads at typical 25kbps through the cellular GSM network.

Preferably the geographical localization data is streamed at a selected time interval through a web service to a central server (such as the server 105 in Fig. 1) using a Virtual Private Network (VPN) gateway into a SQL server database.

Geographical localization data may alternatively be provided using the GSM terminal and the GSM network. Methods of locating GSM emitters within a GSM cellular communication system having a plurality of base stations are already known such as for example with the patent application **WO 0197547 A.**

Preferably a data feed of latitude/longitudinal co-ordinates which is a world wide projection using a round earth is periodically generated by the combined LBS and MOE equipment.

Preferably, a notification of the latitude/longitudinal co-ordinates may be in the form of a simple SMS message or other protocol, and be sent - via the mobile network operator's infrastructure - from the combined LBS and MOE equipment to a Road User Charging operations centre, e.g., to the server 105 in Fig. 1, via the mobile operator's network, e.g. the GSM network 104. The User Charging operations centre can be either local, national, or both local and national, dependent upon the exact nature of a road user charging scheme that is chosen.

When used in the UK, a specific conversion of latitude/longitudinal co-ordinates needs to be operated. The UK mapping systems use Ordnance Survey flat earth projection ( OSGB84 ) or x/y. Therefore the latitude/longitudinal co-ordinates need to be converted to x/y co-ordinates in order to be able to display the vehicle position as a plot point on a map.

A routing engine is used to automatically take the plot points obtained from latitude/longitudinal co-ordinates and snaps the plot points to a vector based road map. Snapping to a real road network may be used to eliminate any GPS inaccuracies.

The journey can then be calculated based on start and end point with plot points in between. This then produces a route list which contains time of journey, road type, direction of travel, total distance and speed.

Preferably the route list may then be validated against provisioned zone data, i.e., whether the vehicle is within a prescribed charging zone or where it is on an entire road network. A "costings" database is used to compare time of day versus road type to produce a cost per road segment which can then be aggregated as the journey progresses in real time.

In a preferred embodiment, "zones" may be set whereby if the vehicle penetrates such a zone, e.g. a congestion zone, then a nominal fixed fee can be charged to the account, again based on time of day parameters.

Results of processing, e.g. account information or route information, can be displayed through a web browser over the web using standard username / password considerations.

An advantage of the road charging system according to the invention is that in all cases the vehicle can be driven at normal travelling speeds and needn't be stopped.

A further advantage of the inventive road charging system is that, although it can be used for national distance-based road user charging, it can also be used for cordon based schemes in and around city centres by simply specifying the co-ordinates of the location where charges are to apply.

The scheme operator(s) may predefine required data, comprising charging zone co-ordinates, time and date, and any other relevant data.

Preferably, the inventive road charging system may provide motorists with multiple payment options such as in advance, in arrears, or pay-as-you-go. In the case of pay-as-you-go, each vehicle is fitted with an onboard charging unit using a credit card (or similar), allowing charges to be deducted during the times they apply.

A further advantage of the inventive road charging system is that it allows a motorist to pay in advance, in arrears, or as-and-when they travel. For prepayment, a user's account is linked to a bank account and a pre-specified sum is deducted periodically via an electronic funds transfer or credit card payment.

Advantageously, prepayment may also be performed without a bank account by placing a prepaid cash deposit in advance, as with a numbered account arrangement. This method of prepayment allows protection of the individual's privacy.

For post-payment, conventional monthly or quarterly billing statements can be automatically sent out and straightforwardly processed.

For 'pay-as-you-go' each vehicle carries a unique identifier and is fitted with an onboard charging unit with a smart card or other similar device. This allows charges to be deducted during the times they apply. One of the advantages of pay-as-you-go is that drivers are far more likely to make a direct connection between the amount being charged and the congestion being caused. In the future pay-as-you-go and regular invoicing are most likely to be used with widespread charging systems.

In case a defective or fraudulent MOE is used, a video enforcement system could be employed to automatically take a picture of the offending vehicle's registration plate. This information, along with details of the location, date, time, or the vehicle class code is automatically transmitted to a central computer system which performs off-vehicle charging, either by prepayment or post-payment.

The road charging system according to the invention is particularly adapted for any large-scale electronic road user charging implementation.

A further advantage of the road charging system according to the invention lies in that it's architecture is scalable. The scheme to operate may be adapted at different levels without huge infrastructure costs. Examples of different levels range from local, within a single closed road, to regional, encompassing a whole town or city, through to nationwide, e.g., either as a single UK scheme or as a national network of charging zones, or hybrid, e.g., supporting multiple local authorities and multiple charging zones.

Unlike many of the prior art systems, the inventive road charging system uses a technology where well established national and international standards already exist. This includes, for example, GPS and mobile phone roaming. It only requires a relatively simple technical investment, therefore, to establish a road user charging scheme that may work across national borders. Consequently, as well as being nationally interoperable the technology is potentially capable of worldwide interoperability.

A further advantage of this methodology is that the MOE unit is based on similar technology to a mobile phone, with the advantage of being cheaper, as it does not require a screen or a pin pad in the simplest case. The estimated purchase price may for example be estimated to lie between £50 and £350, depending on the time at which the device is fitted in the vehicle and the functionality that it offers. Running costs incurred for the motorist may be reduced to a minimum. GPS is free and GSM only needs to be pinged infrequently, in case of loss of GPS signal.

A further advantage of the inventive road charging system may be that once the combined LBS and MOE equipment has been fitted in the vehicle, the same single on-vehicle combined LBS and MOE equipment may support a national road user charging scheme as well as a network of congestion charging zones.

A further advantage of the inventive road charging system solution is that it is dynamic. This means that any MOE revisions and zone changes can be supported Over The Air (OTA) i.e. by direct communication between the system and the MOE. So, for example, revisions to the charging criteria can occur without any physical change to the street infrastructure and at no extra cost. This means that once a scheme is implemented in a town or city it can be extended quickly and easily to cover any specified roads or areas within the same locale.

The inventive road charging system, because of its wide area coverage, may also be used to assist local authorities with their traffic control and management planning by helping them to understand and manage the flow and movement of vehicles and people through their road networks at different times.

The MOE device and corresponding technology may advantageously also be used to supply applications other than road user charging, such as a 'Rescue Me' function. This can be used to initiate a location request, alerting vehicle rescue assistance or emergency services agencies. The MOE device can be contacted by vehicle protection agencies and requested to provide location details for vehicle tracking (of, e.g., stolen cars) and recovery.

The extent of usage for the mobile network is relatively important. However the network costs may be low in comparison to any on-street fixed infrastructure technology employed in prior art road user charging schemes.

A further cost advantage may be seen in that the present invention uses a mobile network already in place and therefore has no infrastructure costs except monitoring programs to be put in place to supervise the traffic of the vehicles and to charge them. The major costs may be the equipment of vehicles with combined LBS and MOE equipment.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A road charging system comprising
- a Location Based Services (LBS) device (101) cooperating with a first network (102) to determine geographical localization data of the LBS device (101),
- a Mobile Operator Emitter (MOE) device (103) cooperating with a second network (104) to transmit at least the geographical localization data of the LBS device (101),
- data capturing means (105) to capture from the second network (104) the geographical localization data,
- locating means (105, 106) to establish a geographical locating of the LBS device (101) from at least the geographical localization data, and
- charging means (107) to charge depending on the locating of the LBS device (101).

2. The road charging system of claim 1, further comprising
- identification data identifying a user of the road charging system,
- registering means (105, 107) to receive identification data over the second network (104), and to identify geographical localization data using the received identification data.

3. The road charging system according to any one of claims 1 or 2, further comprising a second LBS device (103) cooperating with the second network (104) to determine geographical localisation data of the second LBS device (103), the geographical localisation data of the second LBS device (103) being transmitted on the second network (104) using the MOE device (103).

4. The road charging system according to any one of claims 1 to 3, further comprising a map engine (106) providing geographical data to the locating means (105), the locating means using the geographical data and the geographical localization data to locate the LBS device (101) on a map.

5. The road charging system according to anyone of claims 1 to 4, wherein the LBS device (101) is a Global Positioning System (GPS) positioning device operating in a satellite network (102), and the MOE device (103) is a Global System of Mobiles (GSM) terminal (103) operating in a GSM network (104), the MOE device (103) being operatively connected to the LBS device (101) to obtain the geographical localization data.

6. The road charging system according to any one of claims 1 to 5, wherein the LBS device (101) and the MOE device (103) are mounted in a vehicle.

7. The road charging system according to any one of claims 1 to 6, wherein the geographical localization data is transmitted continuously over the second network (104).

8. The road charging system according to any one of claims 1 to 7, further comprising encrypting means to encrypt data transmitted over the second network.

9. The road charging system according to any one of claims 1 to 8, further comprising traffic monitoring means using the geographical locating from the locating means to display a locating of the LBS device (101) on a map.

10. The road charging system according to any one of claims 1 to 9, further comprising a payment system operatively connected to the MOE device and receiving charging data from the charging means (107) over the second network (104).

11. A method for charging a road user (100), comprising
- determining geographical localization data for the road user in a Location Based System network (101, 102),
- transmitting the geographical localization data of the road user (100) over a Mobile Operator Emitter network (103, 104) distinct from the LBS network to a central server (105),
- locating (105, 106) the road user (100) by processing the transmitted geographical localization data,
- charging (107) the road user based on the locating.

12. The method for charging a road user, further comprising
- transmitting identification data for the road user (100) over the MOE network to the central server (105),
- registering (200) the road user (100) based on the transmitted identification data,
- charging (107) the road user (100) based on the registration of the road user.

13. The method according to any one of claims 11 or 12, wherein the determining of geographical localization data is operated using a Global Positioning System (101, 102), and the transmitting of the geographical localization data is operated over a Global System of Mobiles network (103, 104).

14. The method according to claim 13, further comprising determining geographical localization data of the road user using the GSM network.

15. The method according to any one of claims 11 to 14, wherein the charging (107) is operated according to a charging scheme qualified by one or many of terms in the list : point based, area based, national based, local based, continuous based.

16. The method according to any one of claims 11 to 15, further comprising encrypting transmissions over the MOE network.

17. The method according to any one of claims 11 to 16, wherein the charging comprises
- transmitting charging information to the road user over the MOE network,
- executing a payment operation at the road user based on charging information received over the MEO network.
